(19) Europäisches Patentamt
European Patent Office
Office européen des brevets

(11) **EP 3 298 537 B1**

(12) **EUROPÄISCHE PATENTSCHRIFT**

(45) Veröffentlichungstag und Bekanntmachung des Hinweises auf die Patenterteilung:
**06.03.2024   Patentblatt 2024/10**

(21) Anmeldenummer: **16723325.3**

(22) Anmeldetag: **11.05.2016**

(51) Internationale Patentklassifikation (IPC):
**G06V 20/56** *(2022.01)*     **G06V 10/762** *(2022.01)*

(52) Gemeinsame Patentklassifikation (CPC):
**G06V 20/588; G06V 10/82**

(86) Internationale Anmeldenummer:
**PCT/EP2016/060502**

(87) Internationale Veröffentlichungsnummer:
**WO 2016/184738 (24.11.2016 Gazette 2016/47)**

(54) **VERFAHREN ZUR ERMITTLUNG EINER BESCHREIBUNG EINES FAHRSTREIFENS**

METHOD FOR ASCERTAINING A DESCRIPTION OF A LANE

PROCÉDÉ DE DÉTERMINATION DE LA DESCRIPTION D'UNE VOIE DE CIRCULATION

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **20.05.2015   DE 102015209186**

(43) Veröffentlichungstag der Anmeldung:
**28.03.2018   Patentblatt 2018/13**

(73) Patentinhaber: **Bayerische Motoren Werke Aktiengesellschaft**
**80809 München (DE)**

(72) Erfinder:
• **HOFMANN, Marc**
**80797 München (DE)**
• **TANZMEISTER, Georg**
**80804 München (DE)**
• **YAMASHITA, Yusaku**
**2480015 Kamakura, Kanagawa (JP)**

(56) Entgegenhaltungen:
• **Joel Pazhayampallil ET AL: "Deep Learning Lane Detection for Autonomous Vehicle Localization", , 13. Dezember 2013 (2013-12-13), Seiten 1-5, XP055285582, Stanford University, CA, USA Gefunden im Internet: URL:http://cs229.stanford.edu/proj2013/Paz hayampallilKuan-DeepLearningLaneDetectionA utonomousVehicleLocalization.pdf [gefunden am 2016-07-04]**
• **BUNDESMINISTERIUM DER JUSTIZ ED - BUNDESMINISTERIUM DER JUSTIZ: "Handbuch der Rechtsförmlichkeit,Teil B: Allgemeine Empfehlungen für das Formulieren von Rechtsvorschriften; 1: Sprachliche Gestaltung von Gesetzen und Rechtsverordnungen", HANDBUCH DER RECHTSFÖRMLICHKEIT, BUNDESANZEIGER VERLAG, PAGE(S) 1 - 38 , 1. Januar 2008 (2008-01-01), XP002686041, Gefunden im Internet: URL:http://hdr.bmj.de/page_b.1.html [gefunden am 2012-10-25]**
• **MOHAMED ALY: "Real time detection of lane markers in urban streets", INTELLIGENT VEHICLES SYMPOSIUM, 2008 IEEE, IEEE, PISCATAWAY, NJ, USA, 4. Juni 2008 (2008-06-04), Seiten 7-12, XP031318797, ISBN: 978-1-4244-2568-6**
• **CHENG H ET AL: "Springrobot: A Prototype Autonomous Vehicle and Its Algorithms for Lane Detection", IEEE TRANSACTIONS ON INTELLIGENT TRANSPORTATION SYSTEMS, IEEE, PISCATAWAY, NJ, USA, Bd. 5, Nr. 4, 1. Dezember 2004 (2004-12-01), Seiten 300-308, XP011122966, ISSN: 1524-9050, DOI: 10.1109/TITS.2004.838220**

• CHEN CHENYI ET AL: "DeepDriving: Learning Affordance for Direct Perception in Autonomous Driving", 2015 IEEE INTERNATIONAL CONFERENCE ON COMPUTER VISION (ICCV), IEEE, 7. Dezember 2015 (2015-12-07), Seiten 2722-2730, XP032866617, DOI: 10.1109/ICCV.2015.312 [gefunden am 2016-02-17]

• TANZMEISTER GEORG ET AL: "Grid-Based Multi-Road-Course Estimation Using Motion Planning", IEEE TRANSACTIONS ON VEHICULAR TECHNOLOGY, IEEE SERVICE CENTER, PISCATAWAY, NJ, US, Bd. 65, Nr. 4, 1. April 2016 (2016-04-01), Seiten 1924-1935, XP011606355, ISSN: 0018-9545, DOI: 10.1109/TVT.2015.2420752 [gefunden am 2016-04-14]

• Fisher Robert: In: Fisher Robert: "Dictionary of Computer Vision and Image Processing, 2nd ed", 1 January 2014 (2014-01-01), Wiley, XP055785345, pages 96-96, * Entry "Feature" *

• Fisher Robert: "Dictionary of Computer Vision and Image Processing, 2nd ed", 1 January 2014 (2014-01-01), Wiley, XP055785347, pages 192-192, * Entry "Object" *

• GEIGER ANDREAS ET AL: "3D Traffic Scene Understanding From Movable Platforms", IEEE TRANSACTIONS ON PATTERN ANALYSIS AND MACHINE INTELLIGENCE, IEEE COMPUTER SOCIETY, USA, vol. 36, no. 5, 1 May 2014 (2014-05-01), pages 1012-1025, XP011546876, ISSN: 0162-8828, DOI: 10.1109/TPAMI.2013.185 [retrieved on 2014-05-01]

**Beschreibung**

Die Erfindung betrifft ein Verfahren und eine entsprechende Steuereinheit zur Ermittlung von digitalen Karteninformationen, wie z.B. dem Verlauf eines Fahrstreifens für ein Fahrzeug.

Für das hochautomatisierte Fahren werden aktuelle digitale Karten mit hoher Genauigkeit benötigt. Eine digitale Karte umfasst typischerweise Straßenmodelle, welche einzelne Straßen bzw. Fahrbahnen eines Straßennetzes repräsentieren. Das Modell einer Straße zeigt z.B. die Anzahl von Fahrstreifen einer Straße, die Breite der Fahrstreifen, den Verlauf der Fahrstreifen, etc. an. Ein autonom fahrendes Fahrzeug kann eine digitale Karte (und insbesondere die Straßenmodelle einer digitalen Karte) dazu verwenden, um sich in einem Netz von Straßen zu bewegen. Insbesondere kann sich ein autonom fahrendes Fahrzeug auf Basis der digitalen Karte auf einem bestimmten Fahrstreifen einer bestimmten Straße bzw. Fahrbahn bewegen.

Digitale Karten werden typischerweise von einem Karten-Anbieter erstellt und in einem Fahrzeug bereitgestellt. Des Weiteren werden die digitalen Karten in einem dedizierten Prozess von dem Anbieter aktualisiert und in bestimmten Zeitabständen (z.B. alle drei Monate) als Update zur Verfügung gestellt. Ein derartiger Update-Prozess führt dazu, dass digitale Karten typischerweise keine ausreichende Aktualität und Genauigkeit für die Verwendung in einem autonom fahrenden Fahrzeug aufweisen.

Geiger, "3D Traffic Scene Understanding from Movable Platforms", IEEE TRANSACTIONS ON PATTERN ANALYSIS AND MACHINE INTELLIGENCE, 2014, XP11546876, offenbarte ein probabilistisches maschinelles Lernverfahren zum Erlernen des Verlaufs und der Breite von Fahrstreifen auf der Grundlage der Position und Bewegung anderer Fahrzeuge.

Pazhayampallil, "Deep Learning Lane Detection for Autonomous Vehicle Localization", Stanford University, 2013, XP55285582, offengelegte ein neuronales Faltungsnetzwerk zum Lernen des Verlaufs von Fahrstreifen anhand von Fahrbahnmarkierungen.

M. Aly, "Real time detection of lane markers in urban streets", 2008 IEEE Intelligent Vehicles Symposium, befasst sich mit der Erkennung von Fahrstreifenmarkierungen in Echtzeit. Aus Kameradaten werden mittels Bildverarbeitungsmethoden und Spline-Interpolation die Markierungen von Fahrstreifen ein- oder mehrspuriger Straßen erkannt.

Q. Li et al., "Springrobot: A prototype autonomous vehicle and its algorithms for lane detection" werden ebenfalls Algorithmen offenbart, mit denen aus Kameradaten Fahrstreifenmarkierungen erkannt werden können.

Das vorliegende Dokument befasst sich mit der technischen Aufgabe, in effizienter Weise und zu jedem Zeitpunkt aktuelle und präzise Information über eine von einem Fahrzeug zu befahrenen Fahrbahn bzw. über einen von einem Fahrzeug zu befahrenen Fahrstreifen bereitzustellen.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Verfahren zur Ermittlung einer Beschreibung eines, in einem Umfeld eines Fahrzeugs liegenden, Fahrstreifens beschrieben. Bei dem Fahrstreifen kann es sich um den Fahrstreifen handeln, auf dem das Fahrzeug aktuell fährt. Alternativ oder ergänzend können auch Beschreibungen von ein oder mehreren Nachbar-Fahrstreifen ermittelt werden. Die Beschreibung des Fahrstreifens kann insbesondere Information in Bezug auf den Verlauf des Fahrstreifens und/oder in Bezug auf die Breite des Fahrstreifens umfassen. Beispielsweise kann die Beschreibung eine Vielzahl von Punkten des Fahrstreifens in Fahrtrichtung vor dem Fahrzeug anzeigen.

Das Verfahren umfasst das Ermitteln einer Zuweisungsfunktion, die eingerichtet ist, unterschiedlichen Werten eines Merkmalsvektors unterschiedliche Beschreibungen eines Fahrstreifens zuzuweisen. Die Zuweisungsfunktion kann im Rahmen eines Maschineniem-Verfahrens auf Basis von Trainingsdaten angelernt worden sein. Somit kann die Zuweisungsfunktion dem Wert eines Merkmalsvektors eine Beschreibung eines Fahrstreifens zuweisen, die in Anbetracht der Trainingsdaten eine hohe (ggf. eine maximale) statistische Relevanz für den Wert des Merkmalsvektors aufweist.

Der Merkmalsvektor kann dabei eine Vielzahl von Merkmalen umfassen, wobei die Vielzahl von Merkmalen ein oder mehrere Eigenschaften einer Fahrbahnmarkierung und/oder von ein oder mehreren Objekten in dem Umfeld des Fahrzeugs beschreibt (insbesondere in dem Umfeld in Fahrtrichtung vor dem Fahrzeug). Die ein oder mehreren Eigenschaften können eine Position $y_{FB}$ der Fahrbahnmarkierung, eine Orientierung, insbesondere einen Heading-Winkel $\varphi_{FB}$, der Fahrbahnmarkierung und/oder eine Krümmung $\theta_{FB}$ der Fahrbahnmarkierung umfassen. Alternativ oder ergänzend können die ein oder mehreren Eigenschaften eine Position $y_n$ eines Objektes, eine Bewegungsgeschwindigkeit des Objektes und/oder eine Bewegungsrichtung des Objektes umfassen. Somit kann durch den Merkmalsvektor eine kompakte und repräsentative Beschreibung des Umfelds des Fahrzeugs bereitgestellt werden. Der Merkmalsvektor kann dazu eine begrenzte Anzahl von Dimensionen, d.h. eine begrenzte Anzahl von Merkmalen, umfassen (z.B. 40, 30 oder weniger Merkmale).

Das Verfahren umfasst das Ermitteln von Umfelddaten des Fahrzeugs, wobei die Umfelddaten Information über die Fahrbahnmarkierung und/oder über die ein oder mehrere Objekte im Umfeld des Fahrzeugs anzeigen. Die Umfelddaten können insbesondere Kameradaten, Radardaten, LIDAR-Daten, und/oder Ultraschalldaten von entsprechenden Umfeldsensoren des Fahrzeugs umfassen. Auf Basis der Umfelddaten kann ein aktueller Wert des Merkmalsvektors ermittelt werden. Insbesondere können aktuelle Werte für eine Vielzahl von Merkmalen des Merkmalsvektors ermittelt werden. Aus diesen ergibt sich dann der aktuelle Wert des Merkmalsvektors.

Die ein oder mehreren Objekte im Umfeld des Fahrzeugs können insbesondere ein oder mehrere andere Fahrzeuge und/oder ein oder mehrere andere Verkehrsteilnehmer auf der vom Fahrzeug befahrenen Fahrbahn umfassen. Alternativ oder ergänzend können die ein oder mehreren Objekte im Umfeld des Fahrzeugs ein oder mehrere Randbebauungen der Fahrbahn umfassen, wie z.B. ein oder mehrere Leitplanken, ein oder mehrere Pylonen, ein oder mehrere Balken, etc.

Das Verfahren umfasst außerdem das Bestimmen einer Beschreibung des Fahrstreifens anhand der Zuweisungsfunktion und anhand des aktuellen Wertes des Merkmalsvektors. Insbesondere können ein oder mehrere Beschreibungen des Fahrstreifens ermittelt werden, die durch die Zuweisungsfunktion dem aktuellen Wert des Merkmalsvektors zugewiesen werden. Aus den ein oder mehreren Beschreibungen kann dann (z.B. durch Mittelung) eine Beschreibung des Fahrstreifens bestimmt werden.

Durch die Beschreibung des Umfelds eines Fahrzeugs anhand eines Merkmalsvektors und durch die Verwendung einer (angelernten) Zuweisungsfunktion kann in effizienter Weise eine aktuelle und präzise Beschreibung eines Fahrstreifens bereitgestellt werden. Dies kann in analoger Weise für eine Fahrbahn mit einer Vielzahl von Fahrstreifen erfolgen. Das Verfahren kann dabei in autonomer Weise durch die Steuereinheit eines Fahrzeugs ausgeführt werden, und ermöglicht es somit dem Fahrzeug aktuelle digitale Karteninformation zu ermitteln, die dann z.B. für eine autonome Fahrfunktion des Fahrzeugs verwendet werden kann.

Das Verfahren kann dafür verwendet werden, eine Beschreibung bzw. ein Modell eines Ego-Fahrstreifens des Fahrzeugs und/oder von ein oder mehreren Nachbar-Fahrstreifen des Fahrzeugs zu bestimmen. Insbesondere kann das Verfahren dazu verwendet werden, eine Beschreibung bzw. ein Modell für eine Fahrbahn mit einer Vielzahl von Fahrstreifen zu bestimmen.

Die Zuweisungsfunktion kann insbesondere ein neuronales Netzwerk mit einer Vielzahl von Neuronen umfassen. Dabei ist ein Neuron eingerichtet, einem repräsentativen Wert des Merkmalsvektors eine entsprechende Beschreibung des Fahrstreifens zuzuweisen. Alternativ oder ergänzend kann die Zuweisungsfunktion eine Vielzahl von Cluster mit einer entsprechenden Vielzahl von Cluster-Repräsentanten umfassen. Dabei weist der Cluster-Repräsentant eines Clusters die gleiche Dimension auf wie der Merkmalsvektor. Des Weiteren ist dabei jedem der Vielzahl von Cluster eine (unterschiedliche) Beschreibung des Fahrstreifens zugewiesen. Durch die Verwendung von neuronalen Netzwerken und/oder durch die Verwendung von Cluster-Algorithmen kann in effizienter Weise eine präzise Zuweisungsfunktion mit Trainingsdaten angelernt werden. Das Anlernen kann in einem vorgelagerten Trainingsprozess erfolgen, und die angelernte Zuweisungsfunktion kann anschließend auf einer Speichereinheit des Fahrzeugs bereitgestellt werden. Dies ermöglicht dann dem Fahrzeug eine präzise und aktuelle Ermittlung von Fahrstreifen-Beschreibungen.

Das Bestimmen einer Beschreibung des Fahrstreifens kann umfassen, das Ermitteln eines Abstandsmaßes zwischen dem aktuellen Wert des Merkmalsvektors und den repräsentativen Werten der Vielzahl von Neuronen. Es können dann die ein oder mehreren Neuronen ausgewählt werden, für die sich ein relativ niedriges Abstandsmaß ergibt. Die ein oder mehreren Beschreibungen des Fahrstreifens ergeben sich aus den Fahrstreifen-Beschreibungen, die den ein oder mehreren ausgewählten Neuronen zugewiesen sind. Diese ein oder mehreren Beschreibungen können ggf. gemittelt werden, um die durch das Verfahren bereitgestellte Beschreibung des Fahrstreifens zu bestimmen.

Alternativ oder ergänzend kann das Bestimmen einer Beschreibung des Fahrstreifens umfassen, das Ermitteln eines Abstandsmaßes zwischen dem aktuellen Wert des Merkmalsvektors und der Vielzahl von Cluster-Repräsentanten. Es können dann die ein oder mehreren Cluster ausgewählt werden, für die sich ein relativ niedriges Abstandsmaß ergibt. Die ein oder mehreren Beschreibungen des Fahrstreifens ergeben sich dann aus den Fahrstreifen-Beschreibungen, die den ein oder mehreren ausgewählten Clustern zugewiesen sind. Diese ein oder mehreren Beschreibungen können ggf. gemittelt werden, um die durch das Verfahren bereitgestellte Beschreibung des Fahrstreifens zu bestimmen.

Das Abstandsmaß kann einen (ggf. gewichteten und/oder ggf. quadratischen) Euklidischen Abstand umfassen. Ein oder mehrere der Gewichte des Abstandsmaßes können von der Anzahl $N$ von Objekten abhängen, für die der Merkmalsvektor ein Merkmal aufweist. Insbesondere können die ein oder mehreren Gewichte mit steigender Anzahl $N$ von Objekten ansteigen. Dies kann insbesondere für Gewichte gelten, die eine Eigenschaft einer Fahrbahnmarkierung beschreiben. So kann gewährleistet werden, dass der Einfluss der Eigenschaften der Fahrbahnmarkierung auch bei steigender Anzahl $N$ von Objekten erhalten bleibt. Es kann somit eine gleichbleibend hohe Genauigkeit der ermittelten Beschreibung eines Fahrstreifens gewährleistet werden.

Das Ermitteln eines aktuellen Wertes des Merkmalsvektors kann das Detektieren, auf Basis der Umfelddaten, einer Vielzahl von Objekten im Umfeld des Fahrzeugs umfassen. Des Weiteren können die Abstände der Vielzahl von Objekten zum Fahrzeug ermittelt werden (insbesondere die Abstände in Fahrtrichtung). Die Vielzahl von Objekten kann dann in Abhängigkeit von den Abständen geordnet werden, und es kann ggf. eine Teilmenge der Vielzahl von Objekten selektiert werden, um den aktuellen Wert des Merkmalsvektors zu ermitteln. Insbesondere können die Objekte mit steigendem Abstand in den Merkmalsvektor aufgenommen werden und/oder es können nur die $N$ Objekte mit dem geringsten Abstand in den Merkmalsvektor aufgenommen werden. Durch das Ordnen und/oder Selektieren der Objekte nach Abstand kann sichergestellt werden, dass durch den Merkmalsvektor eine prägnante und zuverlässige Beschreibung des Umfelds des Fahrzeugs bereitgestellt werden. Dies führt wiederum zu einer erhöhten Präzision der ermittelten Beschreibung des Fahrstreifens.

Das Ermitteln einer Zuweisungsfunktion kann umfassen, das Ermitteln einer Anzahl $N$ von Objekten, für die zumindest ein Merkmal in den Merkmalsvektor aufgenommen werden soll. Die Anzahl $N$ kann dabei davon abhängen, wie viele Objekte im Umfeld des Fahrzeugs (z.B. bis zu einem bestimmten Grenzabstand zum Fahrzeug) detektiert werden können. Somit können die Anzahl $N$ und damit die Dimension des Merkmalsvektors variieren. Die Zuweisungsfunktion kann daher in Abhängigkeit von der Anzahl $N$ ermittelt bzw. ausgewählt werden. Beispielsweise kann eine Vielzahl von Zuweisungsfunktionen für unterschiedliche $N$ auf einer Speichereinheit des Fahrzeugs bereitgestellt werden. Es kann dann eine Zuweisungsfunktion für die aktuelle Anzahl $N$ ausgewählt werden. So kann gewährleistet werden, dass auch für unterschiedliche Umfeld-Situationen eine präzise Beschreibung des Fahrstreifens bestimmt werden kann.

Das Verfahren kann weiter umfassen, das Ermitteln von $M$ Zuweisungsfunktionen, wobei eine m-te Zuweisungsfunktion der $M$ Zuweisungsfunktionen, mit $m = 1, ..., M,$ eingerichtet ist, unterschiedlichen Werten eines Merkmalsvektors unterschiedliche Beschreibungen einer Fahrbahn mit m Fahrstreifen zuzuweisen. Es können somit Zuweisungsfunktionen bereitgestellt werden, die es ermöglichen, Beschreibungen für eine unterschiedliche Anzahl $m$ von Fahrstreifen zu bestimmen.

Es kann dann anhand der $M$ Zuweisungsfunktionen und anhand des aktuellen Wertes des Merkmalsvektors, eine optimale Zuweisungsfunktion aus den $M$ Zuweisungsfunktionen bestimmt werden, wobei die optimale Zuweisungsfunktion ein Konfidenzmaß maximiert. Dazu können z.B. für den aktuellen Wert des Merkmalsvektors mittels der $M$ Zuweisungsfunktionen $M$ Beschreibungen von Fahrbahnen mit $m = 1, ..., M$ Fahrstreifen bestimmt werden. Des Weiteren können $M$ Abstandsmaße zu repräsentativen Werten von Neuronen bzw. zu Cluster-Repräsentanten ermittelt werden, aus denen sich die $M$ Beschreibungen ergeben. Die $M$ Abstandsmaße können dann die Konfidenz der entsprechenden $M$ Zuweisungsfunktionen anzeigen. Insbesondere kann die optimale Zuweisungsfunktion das geringste Abstandsmaß von den $M$ Abstandsmaßen aufweisen.

Es kann dann in Abhängigkeit von der optimalen Zuweisungsfunktion die Anzahl von Fahrstreifen einer von dem Fahrzeug befahrenen Fahrbahn bestimmt werden. Insbesondere kann bestimmt werden, dass die Fahrbahn m Fahrstreifen aufweist, wenn die optimale Zuweisungsfunktion der m-ten Zuweisungsfunktion entspricht. Das Verfahren ermöglicht es somit, in effizienter und präziser Weise weitergehende Information (die Anzahl $m$ von Fahrstreifen) über die aktuell befahrene Fahrbahn bereitzustellen.

Gemäß einem weiteren Aspekt wird ein Verfahren zur Ermittlung einer Zuweisungsfunktion beschrieben, die eingerichtet ist, unterschiedlichen Werten eines Merkmalsvektors unterschiedliche Beschreibungen eines Fahrstreifens in einem Umfeld eines Fahrzeugs zuzuweisen. Der Merkmalsvektor umfasst dabei eine Vielzahl von Merkmalen, wobei die Vielzahl von Merkmalen ein oder mehrere Eigenschaften von einer Fahrbahnmarkierung und/oder von ein oder mehreren Objekten im Umfeld des Fahrzeugs beschreibt.

Das Verfahren umfasst das Ermitteln von Trainingsdaten mit einer Vielzahl von Wertepaaren, wobei ein Wertepaar einen tatsächlichen Wert eines Merkmalsvektors und eine entsprechende tatsächliche Beschreibung eines Fahrstreifens bzw. einer Fahrbahn mit einer Vielzahl von Fahrstreifen umfasst. Außerdem umfasst das Verfahren das Anlernen der Zuweisungsfunktion anhand der Trainingsdaten. So kann in effizienter Weise eine Zuweisungsfunktion bereitgestellt werden, die es einem Fahrzeug ermöglicht, eine aktuelle und präzise Beschreibung eines Fahrstreifens bzw. einer Fahrbahn mit einer Vielzahl von Fahrstreifen zu ermitteln.

Gemäß einem weiteren Aspekt wird eine Steuereinheit beschrieben, die eingerichtet ist, ein oder mehrere der in diesem Dokument beschriebenen Verfahren auszuführen.

Gemäß einem weiteren Aspekt wird ein Fahrzeug (insbesondere ein Straßenkraftfahrzeug z.B. ein Personenkraftwagen, ein Lastkraftwagen oder ein Motorrad) beschrieben, das die in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einer Steuereinheit eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen

Figur 1 eine beispielhafte Fahrbahn mit einem Ego-Fahrzeug und einer Vielzahl von Objekten im Umfeld des Ego-Fahrzeugs;

Figur 2 beispielhafte Komponenten eines Fahrzeugs;

Figur 3 ein Ablaufdiagramm eines beispielhaften Verfahrens zur Ermittlung einer Zuweisungsfunktion für die Ermittlung einer Beschreibung eines Fahrstreifens; und

Figur 4 ein Ablaufdiagramm eines beispielhaften Verfahrens zur Ermittlung einer Beschreibung eines Fahrstreifens.

Wie eingangs dargelegt, befasst sich das vorliegende Dokument mit der effizienten Ermittlung von aktuellen und präzisen Informationen über ein Straßennetz. Insbesondere soll einem Fahrzeug zu jedem Zeitpunkt aktuelle und präzise Information über den Verlauf einer Fahrbahn bzw. über den Verlauf eines Fahrstreifens einer aktuell befahrenen Fahrbahn bereitgestellt werden. Das Fahrzeug kann dann diese Information nutzen, um autonom bzw. hochautomatisiert zu fahren.

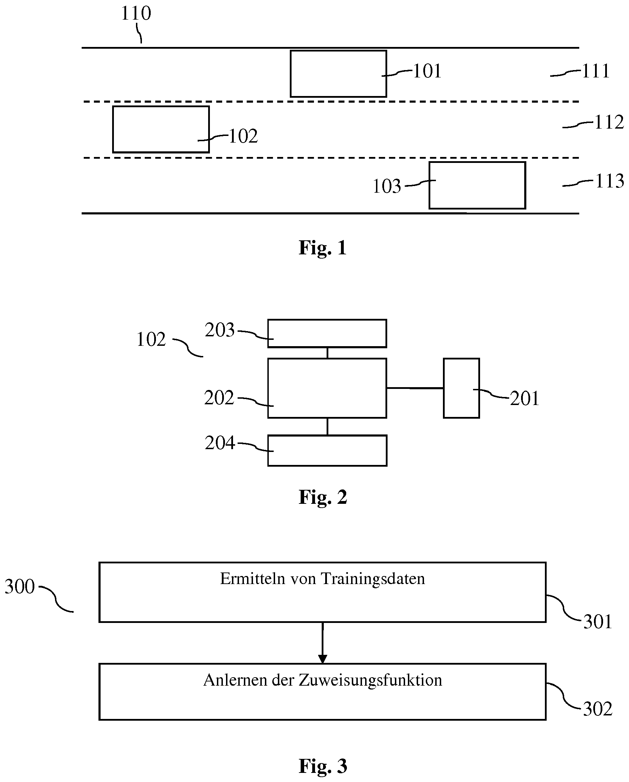

Fig. 1 zeigt eine beispielhafte Fahrbahn 110 mit drei Fahrstreifen 111, 112, 113. Des Weiteren zeigt Fig. 1 ein Fahrzeug 102, welches auf dem zweiten Fahrstreifen 112 fährt. Dieses Fahrzeug 102 wird im Folgenden beispielhaft als Ego-Fahrzeug und der zweite Fahrstreifen 112 als Ego-Fahrstreifen bezeichnet. Außerdem zeigt Fig. 1 eine Vielzahl von Fahrzeugen 101, 103 in der Umgebung des Ego-Fahrzeugs 102. Diese Fahrzeuge 101, 103 sind Beispiele für Objekte im Umfeld des Ego-Fahrzeugs 102.

Fig. 2 zeigt beispielhafte Komponenten des Ego-Fahrzeugs 102. Das Ego-Fahrzeug 102 umfasst ein oder mehrere Umfeldsensoren 201, die eingerichtet sind, Umfelddaten bzgl. des Umfelds des Ego-Fahrzeugs 102 (insbesondere bzgl. des Umfelds in Fahrtrichtung vor dem Ego-Fahrzeug 102) zu erfassen. Die Umfeldsensoren 201 können ein oder mehrere Kameras, ein oder mehrere Radarsensoren, ein oder mehrere LIDAR-Sensoren, etc. umfassen. Außerdem umfasst das Ego-Fahrzeug 102 eine Steuereinheit 202, die eingerichtet ist, die Umfelddaten auszuwerten und auf Basis der Umfelddaten ein oder mehrere Objekte 101, 103 im Umfeld des Ego-Fahrzeugs 102 zu detektieren. Des Weiteren kann Information über die Position und die Bewegung der ein oder mehreren Objekte 101, 103 ermittelt werden. Insbesondere können eine Geschwindigkeit und/oder eine Bewegungsrichtung eines Objekts 101, 103 ermittelt werden. Die Information bzgl. der ein oder mehreren Objekte 101, 103 kann relativ zum Ego-Fahrzeug 102 ermittelt werden.

Die Steuereinheit 202 ist weiter eingerichtet, ein oder mehrere Aktuatoren 203 des Ego-Fahrzeugs 102 anzusteuern, um das Ego-Fahrzeug 102 in Längsrichtung und/oder Querrichtung zu steuern. Insbesondere kann die Steuereinheit 202 eingerichtet sein, das Ego-Fahrzeug 102 in autonomer Weise, d.h. ohne Eingriff eines Fahrers des Ego-Fahrzeugs 102, in Längs- und/oder Querrichtung zu führen. Beispielsweise kann das Ego-Fahrzeug 102 automatisch in dem Ego-Fahrstreifen 112 geführt werden. Zu diesem Zweck können die Umfelddaten ausgewertet werden. Insbesondere kann auf Basis der Umfelddaten z.B. der Verlauf von Fahrbahnmarkierungen des Ego-Fahrstreifens 112 ermittelt werden.

Des Weiteren kann die Steuereinheit 202 eingerichtet sein, auf digitale Karteninformation zuzugreifen, die auf einer Speichereinheit 204 des Fahrzeugs 102 gespeichert ist. Die digitale Karteninformation kann z.B. die Anzahl von Fahrstreifen 111, 112, 113 und den Verlauf der Fahrstreifen 111, 112, 113 der aktuell befahrenen Fahrbahn 110 anzeigen. Die Steuereinheit 202 kann auch diese Information dazu verwenden, das Ego-Fahrzeug 102 autonom in Längs- und/oder Querrichtung über die aktuelle Fahrbahn 110 zu führen.

Die digitale Karteninformation wird typischerweise von einem Karten-Anbieter bereitgestellt und in relativ großen Zeitabständen aktualisiert. Es kann somit nicht gewährleistet werden, dass die digitale Karteninformation zu einem bestimmten Zeitpunkt korrekt ist. Insbesondere könnte sich der Verlauf der Fahrstreifen 111, 112, 113 aufgrund einer Baustelle verändert haben. Das Vorliegen von fehlerhafter digitaler Karteninformation kann zu einem Abbruch der autonomen Fahrfunktion führen.

Die Steuereinheit 202 kann daher eingerichtet sein, auf eine Zuweisungsfunktion zuzugreifen, die es der Steuereinheit 202 ermöglicht, auf Basis der Umfelddaten eine Beschreibung eines Fahrstreifens 111, 112, 113 im Umfeld des Ego-Fahrzeugs 102 zu ermitteln. Die Zuweisungsfunktion kann in der Speichereinheit 204 des Ego-Fahrzeugs 102 gespeichert sein. Die Beschreibung eines Fahrstreifens 111, 112, 113 kann z.B. umfassen:

- einen, insbesondere vor dem Ego-Fahrzeug 102 liegenden, Verlauf des Fahrstreifens 111, 112, 113. Der Verlauf kann z.B. durch eine Vielzahl von Punkten beschrieben werden, wobei die Punkte in einem vordefinierten Abstand (z.B. 5 Meter) zueinander liegen. So kann z.B. der Verlauf des Fahrstreifens 111, 112, 113 über einen bestimmten vorausliegenden Bereich (z.B. 50 Meter) beschrieben werden.
- eine Breite des Fahrstreifens 111, 112, 113; und/oder
- eine, insbesondere vor dem Ego-Fahrzeug 102 liegende, Unterbrechung des Fahrstreifens 111, 112, 113.

Die Zuweisungsfunktion kann unterschiedliche Merkmalsvektoren unterschiedlichen (vordefinierten) Beschreibungen von Fahrbahnen 110 bzw. Fahrstreifen 111, 112, 113 zuweisen. Dabei kann ein Merkmalsvektor Zustände im Umfeld eines Fahrzeugs 102 beschreiben. Zur Beschreibung des Zustands im Umfeld eines Fahrzeugs 102 kann ein Merkmalsvektor eine Vielzahl von Merkmalen als Dimensionen des Merkmalsvektors umfassen. Diese Merkmale können dabei derart ausgewählt werden, dass sie in effizienter Weise auf Basis von Umfelddaten von ein oder mehreren Umfeldsensoren 201 eines Fahrzeugs 102 ermittelt werden können. Des Weiteren können die Merkmale derart ausgewählt werden, dass sie möglichst unabhängig voneinander sind und dass sie eine möglichst hohe Relevanz in Bezug auf die zu ermittelnden Beschreibung einer Fahrbahn 110 bzw. eines Fahrstreifens 111, 112, 113 haben.

Es haben sich insbesondere die folgenden Merkmale für die Ermittlung des (zukünftigen) Verlaufs einer Fahrbahn 110 bzw. eines Fahrstreifens 112 als vorteilhaft erwiesen. Diese Merkmale können in Fahrbahn-Information, in Objekt-Information und in Rand-Information gruppiert werden. Die Ausprägungen bzw. Werte der unterschiedlichen Merkmale können relativ zu einem Ego-Fahrzeug 102 angegeben werden. Insbesondere kann ein Abstand relativ zu einer Position des Ego-Fahrzeugs 102 angegeben werden. Des Weiteren kann ein Heading-Winkel relativ zu einer Fahrtrichtung des Ego-Fahrzeugs 102 angegeben werden, etc.

Die Fahrbahn-Information kann auf Basis von Fahrbahnmarkierungen ermittelt werden. Insbesondere kann der seitliche Abstand $y_{FB}$ einer Fahrbahnmarkierung eines aktuell befahrenen Fahrstreifens 112 zu einem Ego-Fahrzeug 102 auf diesem Fahrstreifen 112 ermittelt werden. Des Weiteren kann ein Heading-Winkel $\varphi_{FB}$ der Fahrbahnmarkierung und/oder eine Krümmung $\theta_{FB}$ der Fahrbahnmarkierung und/oder eine Krümmungsänderung $\theta_{FB}$ der Fahrbahnmarkierung ermittelt werden. Die Fahrbahn-Information kann z.B. auf Basis von Umfelddaten ermittelt werden, welche die Fahrbahn 110 vor einem Ego-Fahrzeug 102 anzeigen.

Die Objekt-Information kann für ein oder mehrere (ggf. für alle) der im Umfeld eines Ego-Fahrzeugs 102 detektierten Objekte 101, 103 ermittelt werden. Insbesondere kann ein seitlicher Abstand $y_n$ eines $n$-ten Objekts 101 von $n = 1, ..., N$ Objekten 101, 103 zu einem Ego-Fahrzeug 102 ermittelt werden. Des Weiteren kann Information bzgl. einer Bewegung des $n$-ten Objektes 101 (insbesondere eine Bewegungsrichtung, z.B. ein Heading-Winkel, und/oder eine Bewegungsgeschwindigkeit) ermittelt werden. Beispielsweise kann die Position des $n$-ten Objektes 101 an zwei aufeinander folgenden Zeitpunkten ermittelt werden. Aus der Differenz der Positionen kann dann ein Abstands-Delta $dx$ in Fahrtrichtung des Ego-Fahrzeugs 102 und ein Abstands-Delta $dy$ senkrecht zur Fahrtrichtung des Ego-Fahrzeugs 102 ermittelt werden. Das Abstands-Delta $(dx_n, dy_n)$ gibt dann sowohl die Bewegungsrichtung als auch die Bewegungsgeschwindigkeit des $n$-ten Objektes 101 an (relativ zu dem Ego-Fahrzeug 102). Die Objekt-Information kann auf Basis von Umfelddaten ermittelt werden, welche die ein oder mehreren Objekte 101, 103 im Umfeld des Ego-Fahrzeugs 102 anzeigen.

Die Rand-Information kann Information in Bezug auf Randbebauungen, wie z.B. Büsche, Bäume, Häuser, etc. anzeigen. Insbesondere kann eine Position von Randbebauungen relativ zu der Position des Ego-Fahrzeugs 102 angegeben werden. Auch die Rand-Information kann auf Basis von Umfelddaten ermittelt werden.

Die Rand-Information umfasst Objekte, wie z.B. Büsche, Bäume, Häuser, etc., welche typischerweise nicht auf einem Fahrstreifen 111, 112, 113 einer Fahrbahn 110 angeordnet sind. Diese Objekte können jedoch ebenfalls als Objekte im Umfeld des Ego-Fahrzeugs 102 betrachtet werden. Die in diesem Dokument beschriebenen Objekte im Umfeld des Ego-Fahrzeugs 102 können somit Objekt-Information (insbesondere in Bezug auf ein Objekt auf einem Fahrstreifen 111, 112, 113 einer Fahrbahn 110) und/oder Rand-Information (insbesondere in Bezug auf ein Objekt außerhalb der Fahrstreifen 111, 112, 113 einer Fahrbahn 110) umfassen.

Ein Merkmalsvektor kann ein oder mehrere der o.g. Merkmale als Dimension umfassen. Ein beispielhafter Merkmalsvektor x umfasst z.B. Fahrbahn-Information für einen aktuell befahrenden Fahrstreifen 112 eines Ego-Fahrzeugs 102 und Objekt-Information für $N$ Objekten 101, 103 in einem aktuellen Umfeld des Ego-Fahrzeugs 102, d.h.

$$\mathbf{x} = (y_{FB}, \varphi_{FB}, \theta_{FB}, y_1, dx_1, dy_1, ..., y_N, dx_N, dy_N).$$

Die unterschiedlichen Merkmale können in vordefinierten Dimensionen des Merkmalsvektors aufgenommen werden (wie in der obigen Formel angezeigt). Dies ist insbesondere für die unterschiedlichen Objekte von Bedeutung, da sonst eine einzige Umfeld-Situation zu unterschiedlichen Werten von Merkmalsvektoren führen könnte. Die Merkmale der unterschiedlichen Objekte können z.B. in Abhängigkeit von einem Längs-Abstand $x_n$ der $n = 1, ..., N$ Objekte 101 in Fahrtrichtung des Ego-Fahrzeugs 102 in den Merkmalsvektor aufgenommen werden. Beispielsweise kann das Objekt mit dem niedrigsten Längs-Abstand $x_n$ als erstes in den Merkmalsvektor aufgenommen werden, usw. mit steigendem Längs-Abstand $x_n$. Der Längs-Abstand $x_n$ kann auch dazu verwendet werden, eine begrenzte Anzahl von N Objekten 101 für den Merkmalsvektor aus einer größeren Menge von detektierten Objekten 101 auszuwählen. Durch die Abstands-abhängige Auswahl und Aufnahme von Objekt-Merkmalen in den Merkmalsvektor kann gewährleistet werden, dass gleiche Umfeld-Situationen zu gleichen Werten des Merkmalsvektors führen.

Die Merkmale des Merkmalsvektors **x** können eine Vielzahl von unterschiedlichen Werten bzw. Ausprägungen in einem bestimmten WerteBereich annehmen. Die Steuereinheit 202 eines Ego-Fahrzeugs 102 kann eingerichtet sein, aktuelle Werte der Merkmale, und damit einer aktuellen Wert eines Merkmalsvektors **x**, auf Basis von aktuellen Umfelddaten zu ermitteln.

Die Zuweisungsfunktion ist eingerichtet, dem aktuellen Wert eines Merkmalsvektors **x** ein Modell bzw. eine Beschreibung **y** einer Fahrbahn 110 bzw. eines Fahrstreifens 112 der Fahrbahn 110 zuzuweisen. Die Beschreibung **y** einer Fahrbahn 110 bzw. eines Fahrstreifens 112 kann die o.g. Information umfassen. Beispielsweise kann die Beschreibung **y** eines Fahrstreifens 112 eine Vielzahl von Punkten umfassen, welche den vorausliegenden Verlauf des Fahrstreifens 112 beschreiben.

können Trainingsdaten mit einer Vielzahl von Wertpaaren bereitgestellt werden, wobei ein Wertepaar einem tatsächlichen Wert eines Merkmalsvektors und eine entsprechende tatsächliche Beschreibung einer Fahrbahn 110 umfasst. Die Trainingsdaten können anhand von Umfeldsensoren 201 von Fahrzeugen 202 ermittelt werden.

Die Trainingsdaten können dazu verwendet werden, die Zuweisungsfunktion anzulernen. Die Trainingsdaten können mittels eines Cluster-Algorithmus zu Clustern zusammengefasst werden, und es kann für jeden Cluster ein Cluster-Repräsentant ermittelt werden (z.B. als Mittelwert der tatsächlichen Werte der Merkmalsvektoren im Cluster). Desweiteren kann für jeden Cluster eine Beschreibung der Fahrbahn 110 ermittelt werden (z.B. als Mittelwert der tatsächlichen Beschreibungen der Fahrbahn 110 im Cluster). Mittels der Cluster-Repräsentanten kann dann ein aktueller Wert eines Merkmalsvektors einem Cluster zugewiesen werden (unter Verwendung eines bestimmten Abstandsmaßes). Das Cluster kann dann die entsprechende aktuelle Beschreibung der Fahrbahn 110 anzeigen.

Ggf. können separate Zuweisungsfunktionen für die Bestimmung der Beschreibung des aktuell von dem Ego-Fahrzeug 102 befahrenen Fahrstreifens 112 (d.h. des Ego-Fahrstreifens) sowie für die Bestimmung der Beschreibung der Nachbar-Fahrstreifen 111, 113 ermittelt werden. Dazu können die Trainingsdaten zusammengefasst werden, und es kann für jeden Cluster ein Cluster-Repräsentant ermittelt werden (z.B. als Mittelwert der tatsächlichen Werte der Merkmalsvektoren im Cluster). Des Weiteren kann für jeden Cluster eine Beschreibung der Fahrbahn 110 ermittelt werden (z.B. als Mittelwert der tatsächlichen Beschreibungen der Fahrbahn 110 im Cluster). Mittels der Cluster-Repräsentanten kann dann ein aktueller Wert eines Merkmalsvektors einem Cluster zugewiesen werden (unter Verwendung eines bestimmten Abstandsmaßes). Das Cluster kann dann die entsprechende aktuelle Beschreibung der Fahrbahn 110 anzeigen.

Ggf. können separate Zuweisungsfunktionen für die Bestimmung der Beschreibung des aktuell von dem Ego-Fahrzeug 102 befahrenen Fahrstreifens 112 (d.h. des Ego-Fahrstreifens) sowie für die Bestimmung der Beschreibung der Nachbar-Fahrstreifen 111, 113 ermittelt werden. Dazu können die Trainingsdaten in erste Trainingsdaten mit Wertepaaren der Merkmalsvektoren und der entsprechenden Beschreibung des Ego-Fahrstreifens, und in zweite Trainingsdaten mit Wertepaaren der Merkmalsvektoren und der entsprechenden Beschreibung aller Fahrstreifen 111, 112, 113 aufgeteilt werden. Mittels der ersten Trainingsdaten kann dann eine erste Zuweisungsfunktion ermittelt werden, durch die die Beschreibung des Ego-Fahrstreifens 112 bestimmt werden kann, und mittels der zweiten Trainingsdaten kann dann eine zweite Zuweisungsfunktion ermittelt werden, durch die die Beschreibung aller Fahrstreifen 111, 112, 113 einer Fahrbahn 110 bestimmt werden kann. So kann erreicht werden, dass die Beschreibung des Ego-Fahrstreifens 112 mit einer besonders hohen Genauigkeit ermittelt werden kann. Dies ist vorteilhaft, da der Ego-Fahrstreifen 112 für das autonome Fahren des Ego-Fahrzeugs 102 von besonderer Bedeutung ist.

Die Anzahl **N** von detektieren Objekten 101 im (vorderen) Umfeld des Ego-Fahrzeugs 102 kann schwanken. Des Weiteren kann die Anzahl **M** von Fahrstreifen 111, 112, 113 einer Fahrbahn 110 schwanken. Um eine präzise Ermittlung der Beschreibung einer Fahrbahn 110 bzw. eines Fahrstreifens 112 zu ermöglichen, kann es vorteilhaft sein, Zuweisungsfunktionen für unterschiedliche Konstellationen zu ermitteln, wobei sich die unterschiedlichen Konstellationen in Bezug auf

- die Anzahl $N$ von Objekten 101 in dem Merkmalsvektor; und/oder
- die Anzahl $M$ von Fahrstreifen 111, 112, 113, der zu beschreibenden Fahrbahn 110

unterscheiden können. Beispielsweise können Zuweisungsfunktionen für $N = 1, ... ,20$ und/oder für $M = 1, ... ,5$ Fahrstreifen 111, 112, 113 ermittelt werden. Somit ergeben sich $N \times M$ (z.B. 100) Zuweisungsfunktionen, die ermittelt und auf der Speichereinheit 204 eines Ego-Fahrzeugs 102 gespeichert werden können.

Die Steuereinheit 202 kann eingerichtet sein, auf Basis von aktuellen Umfelddaten die aktuelle Anzahl $N$ von (relevanten) Objekten 101 zu bestimmen. Es können dann die $M$ Zuweisungsfunktionen für Konstellationen mit der aktuellen Anzahl $N$ von (relevanten) Objekten 101 ausgewählt werden (z.B. $M = 5$ Zuweisungsfunktionen für $m = 1, ...,$ $M$ Fahrstreifen 111, 112, 113).

Die Steuereinheit 202 kann weiter eingerichtet sein, auf Basis der aktuellen Umfelddaten einen aktuellen Wert des Merkmalsvektors (für $N$ Objekte 101) zu bestimmen. Der aktuelle Wert des Merkmalsvektors und die $M$ Zuweisungsfunktionen können dann dazu verwendet werden, eine Beschreibung für die Fahrbahn 110 zu ermitteln (unter den Annahmen, dass die Fahrbahn 110 $m = 1, ..., M$ Fahrstreifen 111, 112, 113 umfasst). Des Weiteren kann ein Konfidenzmaß für die unterschiedlichen Annahmen ermittelt werden. Das Konfidenzmaß kann z.B. auf Basis des Abstands des aktuellen Wertes des Merkmalsvektors von den unterschiedlichen Neuronen bzw. Cluster-Repräsentanten der $M$ Zuweisungsfunktionen ermittelt werden. Mit dem Konfidenzmaß kann dann bestimmt werden, welche der *M* unterschiedlichen Annahmen korrekt ist, d.h. es kann ermittelt werden, wie viele Fahrstreifen die Fahrbahn 110 tatsächlich aufweist.

Der Abstand zwischen dem Wert eines Merkmalsvektors und einem Neuron bzw. einem Cluster-Repräsentanten kann mittels eines Abstandsmaßes bestimmt werden, wobei das Abstandsmaß z.B. einen Euklidischen Abstand, insbesondere einen quadratischen Euklidischen Abstand umfasst. Dabei kann ggf. eine Normalisierung bzw. eine Gewichtung der unterschiedlichen Dimensionen des Merkmalsvektors erfolgen. Das Abstandsmaß $D(\mathbf{p}, \mathbf{q})$, wobei $\mathbf{p}$ eine Ausprägung des Merkmalsvektors und $\mathbf{q}$ ein repräsentativer Wert eines Neurons bzw. ein Cluster-Repräsentant sind, kann z.B. durch folgende Formel gegeben sein

$$D(\mathbf{p}, \mathbf{q}) = (\mathbf{p} - \mathbf{q})^T \mathbf{W} (\mathbf{p} - \mathbf{q}).$$

$\mathbf{W}$ ist dabei eine diagonale Gewichtungsmatrix, die von der Anzahl *N* von Objektes 101 abhängt, welche im Merkmalsvektor berücksichtigt werden. $\mathbf{W}$ kann die Merkmale der Fahrbahn-Information mit $\alpha = \frac{R_O N + 1}{R_{FB}}$ gewichten, wobei $R_{FB}$ der Anzahl von Merkmalen aus der Fahrbahn-Information und $R_O$ der Anzahl von Merkmalen pro Objekt 101 entspricht. Andererseits können die Merkmale der Objekte 101 mit "1" gewichtet sein. Somit kann das Abstandsmaß unabhängig von der Anzahl *N* von Objekten 101 im Merkmalsvektor gemacht werden. Insbesondere kann so die Präzision der Ermittlung der Beschreibung einer Fahrbahn 110 vereinheitlicht werden.

Bei Betrieb des Ego-Fahrzeugs 102 können durch die Steuereinheit 202 anhand der aktuellen Umfelddaten ein aktueller Wert eines Merkmalsvektors und zumindest eine Zuweisungsfunktion ermittelt werden. Es kann damit eine bestimmte Anzahl *K* von Beschreibungen der Fahrbahn 110 ermittelt werden. Beispielsweise können die *K* Neuronen der Zuweisungsfunktion ermittelt werden, die dem aktuellen Wert des Merkmalsvektors am nächsten liegen. Aus den *K* Neuronen ergeben sich dann *K* Beschreibungen der Fahrbahn 110. Die prädizierte Beschreibung der Fahrbahn 110 kann dann auf Basis der *K* Beschreibungen (z.B. als Mittelwert der *K* Beschreibungen) ermittelt werden.

Fahrstreifens 112 umfasst. Desweiteren umfasst das Verfahren das Anlernen 302 der Zuweisungsfunktion anhand der Trainingsdaten. Insbesondere können so ein neuronales Netzwerk und/oder eine Cluster-Funktion angelernt werden.

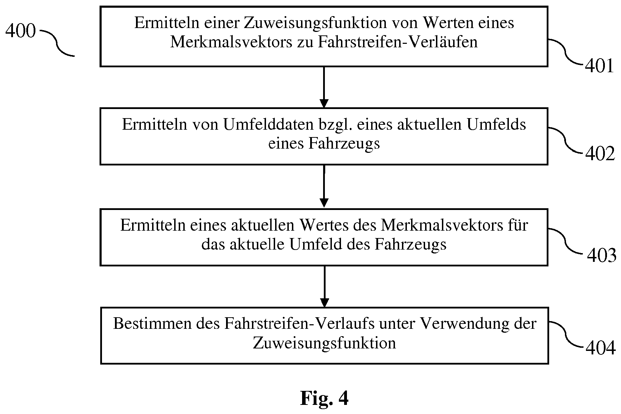

Fig. 4 zeigt ein Ablaufdiagramm eines beispielhaften Verfahrens 400 zur Ermittlung einer Beschreibung eines, in einem Umfeld eines Fahrzeugs 102 liegenden, Fahrstreifens 112. Das Verfahren 400 umfasst das Ermitteln 401 einer Zuweisungsfunktion, die eingerichtet ist, unterschiedlichen Werten eines Merkmalsvektors unterschiedliche Beschreibungen eines Fahrstreifens 112 zuzuweisen. Die Zuweisungsfunktion kann z.B. von einer Speichereinheit 204 des Fahrzeugs 102 bezogen werden. Das Verfahren 400 umfasst weiter das Ermitteln 402 von Umfelddaten des Fahrzeugs 112, wobei die Umfelddaten Information über eine Fahrbahnmarkierung und/oder über ein oder mehrere Objekte 101, 103 im Umfeld des Fahrzeugs 102 anzeigen. Außerdem umfasst das Verfahren 400 das Ermitteln 403 eines aktuellen Wertes des Merkmalsvektors auf Basis der Umfelddaten. Das Verfahren 400 umfasst weiter das Bestimmen 404 einer Beschreibung des Fahrstreifens 112 anhand der Zuweisungsfunktion und anhand des aktuellen Wertes des Merkmalsvektors.

**Patentansprüche**

**1.** Verfahren (400) zur Ermittlung einer Beschreibung eines, in einem Umfeld eines Fahrzeugs (102) liegenden, Fahrstreifens (112), wobei das Verfahren (400) durch eine Steuereinheit (202) ausgeführt wird; wobei das Verfahren (400) umfasst,

- Ermitteln (401), durch Zugriff, einer angelernten Zuweisungsfunktion, die eingerichtet ist, unterschiedlichen Werten eines Merkmalsvektors unterschiedliche Beschreibungen eines Fahrstreifens (112) zuzuweisen; wobei eine Beschreibung Information in Bezug auf einen Verlauf des Fahrstreifens (112) und/oder in Bezug auf eine Breite des Fahrstreifens (112) umfasst; wobei der Verlauf des Fahrstreifens (112) durch eine Vielzahl von Punkten des Fahrstreifens (112) in Fahrtrichtung vor dem Fahrzeug (102) beschrieben wird, wobei die Punkte in einem vordefinierten Abstand zueinander liegen; wobei die Zuweisungsfunktion anhand von Trainingsdaten angelernt wurde; wobei die Trainingsdaten eine Vielzahl von Wertpaaren umfassen, die jeweils einen tatsächlichen Wert eines Merkmalsvektors und eine entsprechend tatsächliche Beschreiben eines Fahrstreifens (112) umfassen; wobei die Trainingsdaten mittels eines Cluster-Algorithmus zu einer Vielzahl von Cluster mit einer entsprechenden Vielzahl von Cluster-Repräsentanten zusammengefasst wurden; wobei der Cluster-Repräsentant eines Clusters eine gleiche Dimension aufweist wie der Merkmalsvektor; wobei jedem der Vielzahl von Cluster eine unterschiedliche Beschreibung des Fahrstreifens zugewiesen wird;
- Ermitteln (402) von Umfelddaten des Fahrzeugs (102); wobei die Umfelddaten Kameradaten, Radardaten, LIDAR-Daten, und/oder Ultraschalldaten von entsprechenden Umfeldsensoren (201) des Fahrzeugs (102) umfassen; wobei die Umfelddaten Information über ein oder mehrere Objekte (101, 103) im Umfeld des Fahrzeugs (102) anzeigen; wobei die ein oder mehreren Objekte (101, 103) im Umfeld des Fahrzeugs (102) ein oder mehrere andere Fahrzeuge auf einer von dem Fahrzeug (102) befahrenen Fahrbahn umfassen; und wobei die Umfelddaten Information über eine Fahrbahnmarkierung eines aktuell von dem Fahrzeug (102) befahrenen Fahrstreifens anzeigen;
- Ermitteln (403) eines aktuellen Wertes des Merkmalsvektors auf Basis der Umfelddaten; wobei Merkmale des Merkmalsvektors Eigenschaften der ein oder mehreren Objekte (101, 103) beschreiben; und wobei die Eigenschaften umfassen:

- eine Position eines Objektes (101, 103);
- eine Bewegungsgeschwindigkeit des Objektes (101, 103); und
- eine Bewegungsrichtung des Objektes (101, 103); und
wobei Merkmale des Merkmalsvektors Eigenschaften der Fahrbahnmarkierung umfassen; wobei die Eigenschaften umfassen,

- eine Position der Fahrbahnmarkierung;
- eine Orientierung, insbesondere einen Heading-Winkel, der Fahrbahnmarkierung; und
- eine Krümmung der Fahrbahnmarkierung; wobei unterschiedliche Merkmale in vordefinierten Dimensionen des Merkmalsvektors aufgenommen werden; und

wobei das Ermitteln (401) der Zuweisungsfunktion umfasst,

- Ermitteln der Anzahl $N$ von Objekten (101, 103), für die zumindest ein Merkmal in den Merkmalsvektor aufgenommen werden soll; und
- Ermitteln der Zuweisungsfunktion in Abhängigkeit von der Anzahl $N$; und

- Bestimmen (404) einer Beschreibung des Fahrstreifens (112) anhand der Zuweisungsfunktion und anhand des aktuellen Wertes des Merkmalsvektors; wobei das Bestimmen (404) der Beschreibung des Fahrstreifens (112) umfasst, Zuweisen des aktuellen Wertes des Merkmalsvektors zu einem Cluster der Vielzahl von Cluster mittels der Vielzahl von Cluster-Repräsentanten.

2. Verfahren (400) gemäß einem der vorhergehenden Ansprüche, wobei das Ermitteln (403) eines aktuellen Wertes des Merkmalsvektors umfasst,

- Detektieren einer Vielzahl von Objekten (101, 103) im Umfeld des Fahrzeugs (102) auf Basis der Umfelddaten;
- Ermitteln von Abständen der Vielzahl von Objekten (101, 103) zum Fahrzeug (102); und
- Selektieren und/oder Ordnen der Vielzahl von Objekten (101, 103) in Abhängigkeit von den Abständen.

3. Steuereinheit (202) zur Ermittlung einer Beschreibung eines, in einem Umfeld eines Fahrzeugs (102) liegenden, Fahrstreifens (112), wobei die Steuereinheit (202) eingerichtet ist,

- durch Zugriff eine angelernte Zuweisungsfunktion zu ermitteln, die eingerichtet ist, unterschiedlichen Werten eines Merkmalsvektors unterschiedliche Beschreibungen eines Fahrstreifens (112) zuzuweisen; wobei eine Beschreibung Information in Bezug auf einen Verlauf des Fahrstreifens (112) und/oder in Bezug auf eine Breite des Fahrstreifens (112) umfasst; wobei der Verlauf des Fahrstreifens (112) durch eine Vielzahl von Punkten des Fahrstreifens (112) in Fahrtrichtung vor dem Fahrzeug (102) beschrieben wird, wobei die Punkte in einem vordefinierten Abstand zueinander liegen; wobei die Zuweisungsfunktion anhand von Trainingsdaten angelernt wurde; wobei die Trainingsdaten eine Vielzahl von Wertpaaren umfassen, die jeweils einen tatsächlichen Wert eines Merkmalsvektors und eine entsprechend tatsächliche Beschreiben eines Fahrstreifens (112) umfassen; wobei die Trainingsdaten mittels eines Cluster-Algorithmus zu einer Vielzahl von Cluster mit einer entsprechenden Vielzahl von Cluster-Repräsentanten zusammengefasst wurden; wobei der Cluster-Repräsentant eines Clusters eine gleiche Dimension aufweist wie der Merkmalsvektor; wobei jedem der Vielzahl von Cluster eine unterschiedliche Beschreibung des Fahrstreifens zugewiesen wird;
- Umfelddaten des Fahrzeugs (102) zu ermitteln; wobei die Umfelddaten Kameradaten, Radardaten, LIDAR-Daten, und/oder Ultraschalldaten von entsprechenden Umfeldsensoren (201) des Fahrzeugs (102) umfassen;

wobei die Umfelddaten Information über ein oder mehrere Objekte (101, 103) im Umfeld des Fahrzeugs (102) anzeigen; wobei die ein oder mehreren Objekte (101, 103) im Umfeld des Fahrzeugs (102) ein oder mehrere andere Fahrzeuge auf einer von dem Fahrzeug (102) befahrenen Fahrbahn umfassen; und wobei die Umfelddaten Information über eine Fahrbahnmarkierung eines aktuell von dem Fahrzeug (102) befahrenen Fahrstreifens anzeigen;

- einen aktuellen Wert des Merkmalsvektors auf Basis der Umfelddaten zu ermitteln; wobei Merkmale des Merkmalsvektors Eigenschaften der ein oder mehreren Objekte (101, 103) beschreiben; und wobei die Eigenschaften umfassen:

- eine Position eines Objektes (101, 103);
- eine Bewegungsgeschwindigkeit des Objektes (101, 103); und
- eine Bewegungsrichtung des Objektes (101, 103); und
wobei Merkmale des Merkmalsvektors Eigenschaften der Fahrbahnmarkierung umfassen; wobei die Eigenschaften umfassen,

- eine Position der Fahrbahnmarkierung;
- eine Orientierung, insbesondere einen Heading-Winkel, der Fahrbahnmarkierung; und
- eine Krümmung der Fahrbahnmarkierung; und

wobei zum Ermitteln der Zuweisungsfunktion,

- die Anzahl $N$ von Objekten (101, 103) ermittelt wird, für die zumindest ein Merkmal in den Merkmalsvektor aufgenommen werden soll; und
- die Zuweisungsfunktion in Abhängigkeit von der Anzahl $N$ ermittelt wird; und

- eine Beschreibung des Fahrstreifens (112) anhand der Zuweisungsfunktion und anhand des aktuellen Wertes des Merkmalsvektors zu bestimmen; wobei das Bestimmen der Beschreibung des Fahrstreifens (112) umfasst, Zuweisen des aktuellen Wertes des Merkmalsvektors zu einem Cluster der Vielzahl von Cluster mittels der Vielzahl von Cluster-Repräsentanten.

## Claims

1. Method (400) for ascertaining a description of a lane (112) which is in an environment of a vehicle (102), the method (400) being carried out by a control unit (202); wherein the method (400) comprises

- ascertaining (401), through access, a learned assignment function that is set up to assign different values of a feature vector different descriptions of a lane (112); wherein a description comprises information concerning a profile of the lane (112) and/or concerning a width of the lane (112); wherein the profile of the lane (112) is described by a multiplicity of points in the lane (112) in the direction of travel in front of the vehicle (102), the points being at a predefined distance from one another; wherein the assignment function has been learned on the basis of training data; wherein the training data comprise a multiplicity of value pairs that each comprise an actual value of a feature vector and a correspondingly actual description of a lane (112); wherein the training data have been combined, by means of a cluster algorithm, into a multiplicity of clusters having a corresponding multiplicity of cluster representatives; wherein the cluster representative of a cluster has the same dimension as the feature vector;
wherein each of the multiplicity of clusters is assigned a different description of the lane;

- ascertaining (402) environment data of the vehicle (102); wherein the environment data comprise camera data, radar data, LIDAR data and/or ultrasound data from applicable environment sensors (201) of the vehicle (102); wherein the environment data display information about one or more objects (101, 103) in the environment of the vehicle (102); wherein the one or more objects (101, 103) in the environment of the vehicle (102) comprise one or more other vehicles on a roadway used by the vehicle (102); and wherein the environment data comprise information about a roadway marking in a lane currently used by the vehicle (102);
- ascertaining (403) a current value of the feature vector on the basis of the environment data; wherein features of the feature vector describe properties of the one or more objects (101, 103); and wherein the properties comprise:

- a position of an object (101, 103);
- a speed of movement of the object (101, 103); and
- a direction of movement of the object (101, 103); and wherein features of the feature vector comprise properties of the roadway marking; wherein the properties comprise
- a position of the roadway marking;
- an orientation, in particular a heading angle, of the roadway marking; and
- a curvature of the roadway marking; wherein different features are included in predefined dimensions of the feature vector; and

wherein the ascertaining (401) of the assignment function comprises

- ascertaining the number $N$ of objects (101, 103) for which at least one feature is supposed to be included in the feature vector; and
- ascertaining the assignment function on the basis of the number $N$; and
- determining (404) a description of the lane (112) using the assignment function and using the current value of the feature vector; wherein the determining (404) of the description of the lane (112) comprises assigning the current value of the feature vector to a cluster from the multiplicity of clusters by means of the multiplicity of cluster representatives.

2. Method (400) according to one of the preceding claims, wherein the ascertaining (403) of a current value of the feature vector comprises

- detecting a multiplicity of objects (101, 103) in the environment of the vehicle (102) on the basis of the environment data;
- ascertaining distances of the multiplicity of objects (101, 103) from the vehicle (102); and
- selecting and/or ordering the multiplicity of objects (101, 103) on the basis of the distances.

3. Control unit (202) for ascertaining a description of a lane (112) which is in an environment of a vehicle (102), wherein the control unit (202) is set up

- to ascertain, through access, a learned assignment function that is set up to assign different values of a feature vector different descriptions of a lane (112);
wherein a description comprises information concerning a profile of the lane (112) and/or concerning a width of the lane (112); wherein the profile of the lane (112) is described by a multiplicity of points in the lane (112) in the direction of travel in front of the vehicle (102), the points being at a predefined distance from one another; wherein the assignment function has been learned on the basis of training data; wherein the training data comprise a multiplicity of value pairs that each comprise an actual value of a feature vector and a correspondingly actual description of a lane (112); wherein the training data have been combined, by means of a cluster algorithm, into a multiplicity of clusters having a corresponding multiplicity of cluster representatives; wherein the cluster representative of a cluster has the same dimension as the feature vector; wherein each of the multiplicity of clusters is assigned a different description of the lane;

- to ascertain environment data of the vehicle (102); wherein the environment data comprise camera data, radar data, LIDAR data and/or ultrasound data from applicable environment sensors (201) of the vehicle (102); wherein the environment data display information about one or more objects (101, 103) in the environment of the vehicle (102); wherein the one or more objects (101, 103) in the environment of the vehicle (102) comprise one or more other vehicles on a roadway used by the vehicle (102); and wherein the environment data display information about a roadway marking in a lane currently used by the vehicle (102);
- to ascertain a current value of the feature vector on the basis of the environment data; wherein features of the feature vector describe properties of the one or more objects (101, 103); and wherein the properties comprise:

- a position of an object (101, 103);
- a speed of movement of the object (101, 103); and
- a direction of movement of the object (101, 103); and wherein features of the feature vector comprise properties of the roadway marking; wherein the properties comprise
- a position of the roadway marking;
- an orientation, in particular a heading angle, of the roadway marking; and

- a curvature of the roadway marking; and

wherein to ascertain the assignment function

- the number *N* of objects (101, 103) for which at least one feature is supposed to be included in the feature vector is ascertained; and
- the assignment function is ascertained on the basis of the number *N*; and
- to determine a description of the lane (112) using the assignment function and using the current value of the feature vector; wherein the determining of the description of the lane (112) comprises assigning the current value of the feature vector to a cluster from the multiplicity of clusters by means of the multiplicity of cluster representatives.

## Revendications

1. Procédé (400) pour déterminer une description d'une voie de circulation (112) située dans un environnement d'un véhicule (102), le procédé (400) étant mis en œuvre par une unité de commande (202) ; le procédé (400) comprenant,

   - détermination (401), par accès, d'une fonction d'attribution formée par apprentissage, laquelle est conçue pour attribuer différentes valeurs d'un vecteur de caractéristiques à différentes descriptions d'une voie de circulation (112) ; une description comprenant des informations relatives à un tracé de la voie de circulation (112) et/ou relatives à une largeur de la voie de circulation (112) ; le tracé de la voie de circulation (112) étant décrit par une pluralité de points de la voie de circulation (112) dans le sens du déplacement devant le véhicule (102), les points étant situés à une distance prédéfinie les uns des autres ; la fonction d'attribution ayant été formée par apprentissage à l'aide de données d'entraînement ; les données d'entraînement comprenant une pluralité de paires de valeurs, lesquelles comprennent respectivement une valeur effective d'un vecteur de caractéristiques et une description effective correspondante d'une voie de circulation (112) ; les données d'entraînement ayant été regroupées au moyen d'un algorithme de formation de grappe en une multitude de grappes avec une multitude correspondante de représentants de grappe ; le représentant de grappe d'une grappe possédant une dimension identique à celle du vecteur de caractéristiques ; une description différente de la voie de circulation étant attribuée à chacune de la pluralité de grappes ;
   - détermination (402) de données d'environnement du véhicule (102) ; les données d'environnement comprenant des données de caméra, des données de radar, des données de LIDAR et/ou des données ultrasonores provenant de capteurs d'environnement (201) correspondants du véhicule (102) ; les données d'environnement indiquant des informations à propos d'un ou de plusieurs objets (101, 103) dans l'environnement du véhicule (102) ; l'un ou les plusieurs objets (101, 103) dans l'environnement du véhicule (102) comprenant un ou plusieurs autres véhicules sur une voie de circulation empruntée par le véhicule (102) ; et les données d'environnement indiquant des informations à propos d'un marquage au sol d'une voie de circulation actuellement empruntée par le véhicule (102) ;
   - détermination (403) d'une valeur actuelle du vecteur de caractéristiques sur la base des données d'environnement ; les caractéristiques du vecteur de caractéristiques décrivant des propriétés de l'un ou des plusieurs objets (101, 103) ; et les propriétés comprenant :

     - une position d'un objet (101, 103) ;
     - une vitesse de déplacement de l'objet (101, 103) ; et
     - une direction de déplacement de l'objet (101, 103) ; et
     Les caractéristiques du vecteur de caractéristiques comprenant des propriétés du marquage au sol ; les propriétés comprenant,

       - une position du marquage au sol ;
       - une orientation, notamment un angle de cap, du marquage au sol ; et
       - une courbure du marquage au sol ; différentes caractéristiques étant enregistrées dans des dimensions prédéfinies du vecteur de caractéristiques ; et

   la détermination (401) de la fonction d'attribution comprenant,

     - détermination du nombre *N* d'objets (101, 103) pour lesquels au moins une caractéristique doit être enregistrée dans le vecteur de caractéristiques ; et

- détermination de la fonction d'attribution en fonction du nombre *N* ; et
- spécification (404) d'une description de la voie de circulation (112) à l'aide de la fonction d'attribution et à l'aide de la valeur actuelle du vecteur de caractéristique ; la spécification (404) de la description de la voie de circulation (112) comprenant l'attribution de la valeur actuelle du vecteur de caractéristique à une grappe de la pluralité de grappes au moyen de la pluralité de représentants de grappe.

2. Procédé (400) selon l'une des revendications précédentes, la détermination (403) d'une valeur actuelle du vecteur caractéristique comprenant,

- détection d'une pluralité d'objets (101, 103) dans l'environnement du véhicule (102) sur la base des données d'environnement ;
- détermination de distances de la pluralité d'objets (101, 103) par rapport au véhicule (102) ; et
- sélection et/ou arrangement de la pluralité d'objets (101, 103) en fonction des distances.

3. Unité de commande (202) destinée à déterminer une description d'une voie de circulation (112) située dans un environnement d'un véhicule (102), l'unité de commande (202) étant conçue pour,

- par accès, déterminer une fonction d'attribution formée par apprentissage, laquelle est conçue pour attribuer différentes valeurs d'un vecteur de caractéristiques à différentes descriptions d'une voie de circulation (112) ; une description comprenant des informations relatives à un tracé de la voie de circulation (112) et/ou relatives à une largeur de la voie de circulation (112) ; le tracé de la voie de circulation (112) étant décrit par une pluralité de points de la voie de circulation (112) dans le sens du déplacement devant le véhicule (102), les points étant situés à une distance prédéfinie les uns des autres ; la fonction d'attribution ayant été formée par apprentissage à l'aide de données d'entraînement ; les données d'entraînement comprenant une pluralité de paires de valeurs, lesquelles comprennent respectivement une valeur effective d'un vecteur de caractéristiques et une description effective correspondante d'une voie de circulation (112) ; les données d'entraînement ayant été regroupées au moyen d'un algorithme de formation de grappe en une multitude de grappes avec une multitude correspondante de représentants de grappe ; le représentant de grappe d'une grappe possédant une dimension identique à celle du vecteur de caractéristiques ; une description différente de la voie de circulation étant attribuée à chacune de la pluralité de grappes ;
- déterminer des données d'environnement du véhicule (102) ; les données d'environnement comprenant des données de caméra, des données de radar, des données de LIDAR et/ou des données ultrasonores provenant de capteurs d'environnement (201) correspondants du véhicule (102) ; les données d'environnement indiquant des informations à propos d'un ou de plusieurs objets (101, 103) dans l'environnement du véhicule (102) ; l'un ou les plusieurs objets (101, 103) dans l'environnement du véhicule (102) comprenant un ou plusieurs autres véhicules sur une voie de circulation empruntée par le véhicule (102) ; et les données d'environnement indiquant des informations à propos d'un marquage au sol d'une voie de circulation actuellement empruntée par le véhicule (102) ;
- déterminer une valeur actuelle du vecteur de caractéristiques sur la base des données d'environnement ; les caractéristiques du vecteur de caractéristiques décrivant des propriétés de l'un ou des plusieurs objets (101, 103) ; et les propriétés comprenant :

  - une position d'un objet (101, 103) ;
  - une vitesse de déplacement de l'objet (101, 103) ; et
  - une direction de déplacement de l'objet (101, 103) ; et

Les caractéristiques du vecteur de caractéristiques comprenant des propriétés du marquage au sol ; les propriétés comprenant,

  - une position du marquage au sol ;
  - une orientation, notamment un angle de cap, du marquage au sol ; et
  - une courbure du marquage au sol ; et en vue de déterminer la fonction d'attribution,
  - le nombre *N* d'objets (101, 103) pour lesquels au moins une caractéristique doit être enregistrée dans le vecteur de caractéristiques est déterminé ; et
  - la fonction d'attribution est déterminée en fonction du nombre *N* ; et
  - spécifier une description de la voie de circulation (112) à l'aide de la fonction d'attribution et à l'aide de la valeur actuelle du vecteur de caractéristique ; la spécification de la description de la voie de circulation (112) comprenant l'attribution de la valeur actuelle du vecteur de caractéristique à une grappe de la pluralité de grappes au moyen de la pluralité de représentants de grappe.

110

101
111
102
112
103
113

**Fig. 1**

102
203
202 — 201
204

**Fig. 2**

300

| Ermitteln von Trainingsdaten |
|---|
301

| Anlernen der Zuweisungsfunktion |
|---|
302

**Fig. 3**

400

| Ermitteln einer Zuweisungsfunktion von Werten eines Merkmalsvektors zu Fahrstreifen-Verläufen | 401 |

↓

| Ermitteln von Umfelddaten bzgl. eines aktuellen Umfelds eines Fahrzeugs | 402 |

↓

| Ermitteln eines aktuellen Wertes des Merkmalsvektors für das aktuelle Umfeld des Fahrzeugs | 403 |

↓

| Bestimmen des Fahrstreifen-Verlaufs unter Verwendung der Zuweisungsfunktion | 404 |

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GEIGER.** 3D Traffic Scene Understanding from Movable Platforms. *IEEE TRANSACTIONS ON PATTERN ANALYSIS AND MACHINE INTELLIGENCE,* 2014
- **PAZHAYAMPALLIL.** Deep Learning Lane Detection for Autonomous Vehicle Localization. Stanford University, 2013
- **M. ALY.** Real time detection of lane markers in urban streets. *2008 IEEE Intelligent Vehicles Symposium*
- **Q. LI et al.** *Springrobot: A prototype autonomous vehicle and its algorithms for lane detection*